# EUROPEAN PATENT SPECIFICATION

(11) **EP 2 588 778 B1**
(45) Date of publication and mention of the grant of the patent: **26.11.2014**
(21) Application number: 10725489.8
(22) Date of filing: 29.06.2010
(51) Int. Cl.: F16H 57/04, B01D 17/02, B01D 35/04, B25J 9/10, B25J 19/00, F16N 29/04, F16N 39/06, G01N 33/28

(54) **AN INDUSTRIAL ROBOT TRANSMISSION SYSTEM, AN INDUSTRIAL ROBOT AND A METHOD FOR ABSORBING MOISTURE**
INDUSTRIEROBOTERÜBERTRAGUNGSSYSTEM UND INDUSTRIEROBOTER SOWIE VERFAHREN ZUR FEUCHTIGKEITSABSORPTION
SYSTÈME DE TRANSMISSION DE ROBOT INDUSTRIEL, ROBOT INDUSTRIEL ET PROCÉDÉ PERMETTANT D'ABSORBER L'HUMIDITÉ

(43) Date of publication of application: 08.05.2013
(73) Proprietor: ABB Research Ltd., 8050 Zürich (CH)
(72) Inventor: WÄPPLING, Daniel, S-722 12 Västerås (SE); ERIKSSON, Andreas, S-724 64 Västerås (SE); JOHANSSON, Erik, S-722 45 Västerås (SE)
(74) Representative: Savela, Reino Aleksi
(86) International application number: PCT/EP2010/059192
(87) International publication number: WO 2012/000539

(56) References cited:
- WO-A1-2004/007152
- DE-U1-202009 000 799
- JP-A- 9 239 212
- JP-A- 54 129 252
- US-A- 4 609 458
- US-A- 5 095 844

## Description

### Technical field of the invention

The present invention relates to an industrial robot transmission system for the transmission of movement to a robot part, and an industrial robot comprising such a system. The invention also relates to a method for preventing the deterioration of a lubricant due to absorption of moisture, inside an industrial robot used in surroundings with high humidity, and further to a method for absorbing moisture inside a gearbox containing a lubricant in an industrial robot.

### Background of the invention

Outdoor applications are a relatively new field of use for industrial robots. During outdoor use of robots under humid conditions, it has been found that the lubricant used in e.g. the gearbox of the robot, after some time displays a moisture content that is higher than normal, due to the moisture from the surroundings penetrating into the gearbox. This is a disadvantage since it could lead to less good lubrication, increased wear on machine parts that need lubrication, a shorter life time and consequently higher costs. In order to avoid this, the lubricant has to be checked and changed at shorter intervals which also will increase costs. Alternatively, the lubricant that is used must be a lubricant that is capable of standing higher moisture in the surroundings without negative effects on its lubricating function and capabilities. Another conceivable alternative would be to make the gearbox much tighter, if possible. All of these alternatives involve increased costs.

There is also a problem created by increased moisture content in the gearbox, when the moisture is not absorbed by the lubricant, but is present as free water, dissolved or emulsified by the lubricant, which is equally or more detrimental to the function of the lubricant.

Industrial robots may also be used in other environments where the humidity is high, for example in foundry or wash-down environments such as in food industry. A similar problem with increased moisture content in lubricants may also occur in such applications.

Problems with lubricants absorbing moisture also may occur due to temperature variations which result in a temperature difference between the surroundings and the interior of the gearbox, and this will in turn result in pressure difference between the surroundings and the interior of the gearbox, which may lead to an increase of moisture in the gearbox when humid air is sucked into the gearbox due to lower internal pressure. For example, this may be the case when a robot is operated in two or three shifts, and the day temperature may be considerably higher than the night temperature. These temperature variations in combination with a humid surrounding are a particularly challenging problem.

In WO 2004007152, which represents the closest prior art to the subject-matter of claims 1 and 12, is disclosed an industrial robot with a gear housing filled with a coolant and a lubricant. There is provided a filter in a separate conduit for the coolant and lubricant, which conduit is part of a heat exchanger outside the gear housing. It is generally described that in heat exchangers comprising a coolant and lubricant there is a need to filter away undesired particles from the medium. DE 20 2009 000 799 U1 discloses an oil filter cartridge.

### Summary of the invention

The object of the present invention is to provide a solution to problems related to too high moisture contents in lubricants used in industrial robots, and thereby increase the possibility of using industrial robots in environments with high humidity. The object is also to make this possible in a simple and inexpensive way.

These objects are achieved by the features defined in the appended patent claims.

According to a first aspect of the present invention, is defined an industrial robot transmission system for the transmission of movement to robot parts, comprising at least one motor and at least one gearbox containing a lubricant, characterized in that the gearbox is provided with an integrated moisture absorbing device comprising a moisture absorbing material adapted to absorb moisture contained in the gearbox. By providing the gearbox with an integrated moisture absorbing device, the moisture in the gearbox will be absorbed by the moisture absorbing device instead of being absorbed, dissolved or emulsified by the lubricant, and the moisture absorbing device may also absorb water from the lubricant. This is defined in that the moisture absorbing device comprises a moisture absorbing material with higher affinity to water than the affinity of the lubricant to water.

It is foreseen that the lubricant may come into contact with the moisture absorbing material, in which case the moisture absorbing material may absorb lubricant instead of water or moisture, and become saturated with lubricant, in which case it will not be able to absorb moisture. This may be prevented by the moisture absorbing device comprising a moisture absorbing material with higher affinity to water than to the lubricant.

In many applications it will be desirable that the affinity to water of the moisture absorbing material is such that the absorbing material will both absorb moisture in a gaseous phase from within the gearbox and water present as free water, dissolved in, absorbed or emulsified by the lubricant, as well as preventing lubricant from being absorbed by the moisture absorbing material.

Affinity should be interpreted to include both chemical affinity and physical affinity or a combination thereof.

By integrating the device in the gearbox is provided a simple and inexpensive means for absorbing moisture and thereby prolonging the time span between lubricant changes, decreasing the risk of damage to parts in the gearbox due to reduced lubricating function of the lubricant which in turn is due to an excessive amount of moisture having been absorbed by the lubricant.

By the expression integrating is intended a device that can be kept mounted in the gearbox all the time, and including during operation of the gearbox. There will be no need for any separate external devices that have to be connected and disconnected.

According to one feature, the moisture absorbing device may be removable. Through this, the device may be exchanged whenever desirable, and replaced by a new device.

The moisture absorbing device may be integrated in the gearbox by being provided as part of a plug located in a hole in a wall of the gearbox. The moisture absorbing device with its absorbing material may be arranged in several ways. For example, it may be provided mainly outside the gearbox and the moisture will be absorbed via a hole in the plug providing a communication from the interior of the gearbox to the moisture absorbing material of the device. In an alternative, the moisture absorbing device may be provided mainly inside the gearbox, being attached to the plug and in which case the moisture absorbing material inside the gearbox may be surrounded by a moisture permeable shell or film or similar, if necessary. According to another alternative, the moisture absorbing material may be contained in the plug.

According to another embodiment, the gearbox is provided with at least one oilplug hole for the filling or and draining of lubricant in the gearbox, and the moisture absorbing device is integrated in an oilplug designed to be inserted in the oilplug hole. If a regular oilplug hole of the gearbox can be used for a plug with an integrated moisture absorbing device, this provides a very simple and economic solution, since no separate hole for the moisture absorbing device will be necessary.

It will also be advantageous to have some provision in relation to the moisture absorbing device that will provide an indication of whether the device can still absorb moisture or if it has used up its moisture absorbing capacity, and needs to be replaced. To this end, the moisture absorbing device may comprise a moisture absorbing material having a physical property that is adapted to change depending on the amount of absorbed moisture. Examples of such physical properties may be colour, volume, electrical resistance etc.

According to another alternative, the moisture absorbing device may comprise a sensor device adapted to emit a signal, reflecting the status of absorbed moisture in the moisture absorbing device, to an indicator device which indicates the status of absorbed moisture.

As a further alternative, the moisture absorbing device may comprise a sensor device adapted to emit a signal, reflecting the status of absorbed moisture in the moisture absorbing device, to a control system. This control system may be a robot controller, a programmable logic controller (PLC), a remote service, a remote control device or any other type of control system or device regularly used in connection with industrial robots.

According to another aspect of the invention is defined an industrial robot comprising a transmission system with an integrated moisture absorbing device having the above features.

According to yet another aspect of the invention is defined a method for preventing the deterioration of a lubricant due to absorption of moisture, inside an industrial robot used in surroundings with high humidity, with the step of integrating a moisture absorbing device comprising a moisture absorbing material in a gearbox containing the lubricant and being part of a transmission system for the transmission of movement to a robot part. By integrating a moisture absorbing device in a gearbox containing a lubricant, the moisture will be absorbed by the moisture absorbing device instead of being absorbed by the lubricant, and moisture already absorbed by the lubricant may be reduced, as already discussed above. Consequently deterioration of the lubricant due to excessive moisture content is prevented, and the life span of the lubricant is prolonged. This may be achieved by choosing a moisture absorbing material with higher affinity to water than the affinity of the lubricant to water.

It may also be prevented that the moisture absorbing material absorbs lubricant, as also explained above, by choosing a moisture absorbing material with higher affinity to water than to the lubricant.

According to another feature, the method may have the step of choosing a moisture absorbing material having a physical property that is adapted to change depending on the amount of absorbed moisture. Examples of such physical properties may be colour, volume, electrical resistance etc.

According to a further feature, the method may have the step of integrating the moisture absorbing device in a part of a plug located in a hole in a wall of the gearbox.

According to another feature, the method may be defined by integrating the moisture absorbing device in an oilplug of the gearbox. The advantages related to this have been described above.

Other features and advantages of the invention may be apparent from the appended claims and the following detailed description of embodiments.

It should be mentioned that the expression lubricant is intended to encompass any type of lubricant that may be used in an industrial robot and in particular in a gearbox, for example liquid or solid lubricants of any type.

It should also be mentioned that by moisture is intended fluid moisture such as water in gaseous or liquid form, including such moisture which may be contained in other gases, liquids or solids.

### Brief description of the drawings

The invention will now be described in more detail, with reference being made to the enclosed schematic drawings illustrating different aspects and embodiments of the invention, given as examples only, and in which:
Fig. 1 illustrates schematically an industrial robot,
Fig. 2 shows parts of an industrial robot comprising a transmission system according to the present invention and including a moisture absorbing device,
Fig. 3 shows a first embodiment of a moisture absorbing device according to the present invention,
Fig. 4 shows a second embodiment of a moisture absorbing device according to the present invention,
Fig. 5 shows a third embodiment of a moisture absorbing device according to the present invention, and
Fig. 6 shows a fourth embodiment of a moisture absorbing device according to the present invention.

In the drawings, the same elements or corresponding elements in the different embodiments have been given the same reference number.

### Detailed description of the invention

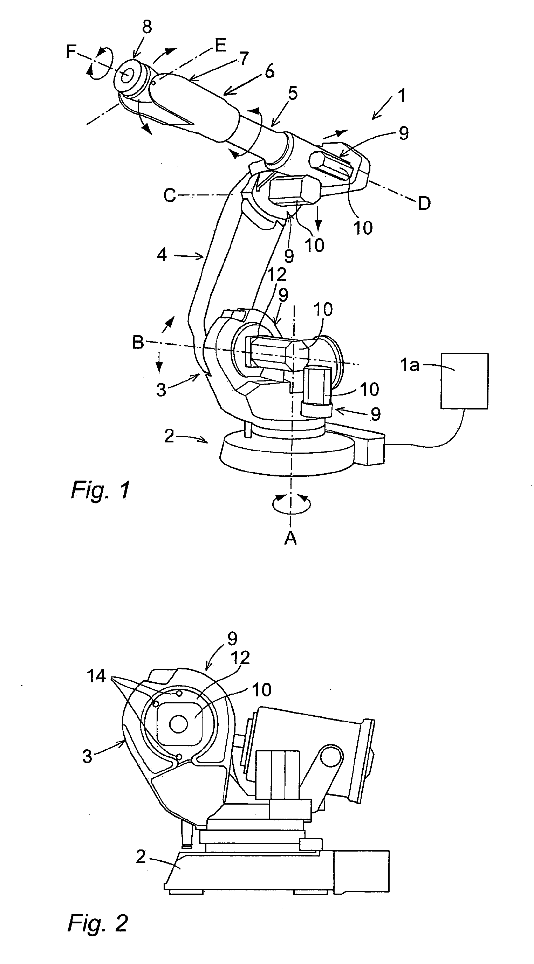

In Fig. 1 is schematically illustrated an industrial robot. An industrial robot 1 comprises a control system, a manipulator, and electric motor units configured to attend to the movements of the manipulator. Each motor unit comprises an electric motor, a brake, a gearbox and other gearing as necessary in order to form a transmission system for the transmission of movement to a movable part of the robot.

The illustrated robot is a conventional six-axis industrial robot 1. However, it is apparent that the invention is not limited to such a robot, but may be used also in robots with more or less axes, and for other types of kinematic solutions such as parallel kinematic robots or SCARA robots.

The illustrated robot has a stand 3 that is rotatably mounted on a base 2, about a first axis of rotation A. In the stand 3, a first robot arm 4 is rotatably journalled for rotation about a second axis of rotation B. The industrial robot further comprises a second robot arm 5, which is rotatably journalled in the outer end of the first robot arm, for rotation about a third axis of rotation C. The second robot arm is also rotatable about a fourth axis of rotation D which coincides with the longitudinal axis of the second robot arm 5. A wrist unit 6 is arranged at the outer end of the second robot arm 5, and said wrist unit comprises a tilt part 7 which is rotatably journalled in the wrist unit 6 for rotation about a fifth axis of rotation E. A turn disc 8, on which an end effector or tool may be mounted, is arranged on the tilt part for rotation about a sixth axis of rotation F. The manipulator is connected to a control system 1a.

In order to drive the connected parts in rotation about the respective axes A, B, C, D, E, F, a transmission system 9 is provided for each movable robot part, of which some of the motors 10 can be seen in Fig. 1.

Fig. 2 illustrates parts of an industrial robot provided with a transmission system 9 according to the present invention. The robot parts are a base 2 and a stand 3, and in the stand is arranged a gearbox 12 connected to an electric motor 10. The transmission system comprising the electric motor 10 and the gearbox 12 transmits a rotational movement to a first robot arm 4 about the axis of rotation B, as seen in Fig. 1. The gearbox is filled with a lubricant, in most cases oil.

A gearbox 12 is in most cases provided with three holes in the gearbox wall 13 in which so called oilplugs are inserted. There is one oilplug and hole for inspection, there is one oilplug and hole for filling oil or other lubricant into the gearbox, and there is one oilplug and hole for draining oil from the gearbox. These holes may be used for the installation of a moisture absorbing device according to the present invention. Alternatively, a separate hole may be made in the wall of the gearbox for the installation of a moisture absorbing device according to the present invention. All of these possible holes that may be used for a moisture absorbing device have been given the reference number 14, irrespective of if they are already existing holes or separate holes made for this particular purpose. However, in most cases it is preferable that the hole is located underneath the normal surface of the lubricant.

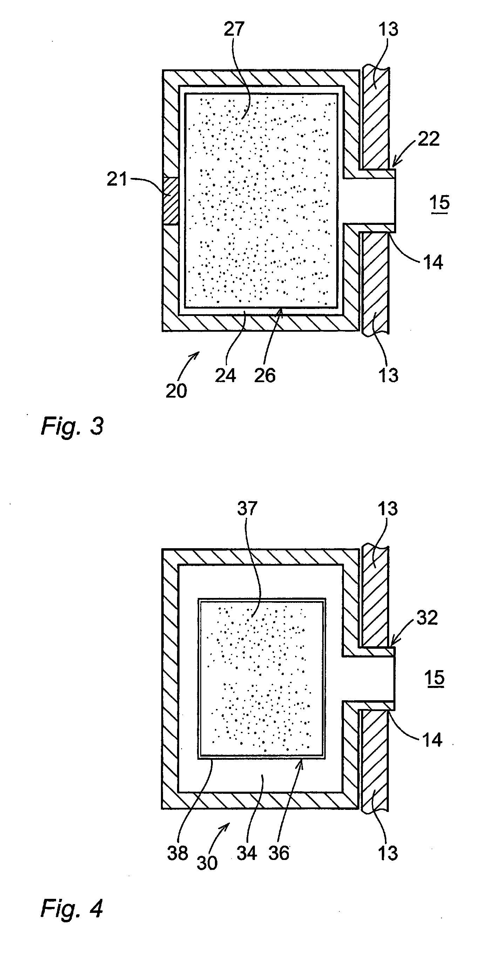

In the following examples of embodiments illustrated in Figs. 3-6, the interior of the gearbox is designated by 15 and the wall of the gearbox is designated by 13.

A first embodiment of a moisture absorbing device 20 is shown in Fig. 3. A hole 14 is provided in the gearbox wall 13, and in this hole a plug 22 is inserted, thereby plugging the hole. The plug is designed with a part comprising a moisture absorbing device 20, which is thus integrated in the gearbox. The part of the plug comprising the moisture absorbing device is located externally of the gearbox. The moisture absorbing device comprises a hollow part 24 in the interior of the plug, which hollow part is located externally of the gearbox when the plug is inserted in the hole 14. In this hollow part 24 there is arranged a moisture absorbing body 26 of a moisture absorbing material 27. Since also the part of the plug that extends through the hole 14 is hollow, there is free communication between the interior 15 of the gearbox and the interior of the plug with the moisture absorbing material 27, and the moisture absorbing material can consequently absorb moisture contained inside the gearbox.

The moisture absorbing material can absorb moisture from the air in the gearbox, or even liquid moisture (water), and it can absorb moisture contained in the oil in the gearbox. This is made possible by choosing a moisture absorbing material that has a higher affinity to water than the affinity of the oil to water, thus preventing that the oil absorbs the moisture/water. The moisture absorbing material may also be chosen to have a higher affinity to water than to the oil, in order to prevent that the moisture absorbing material absorbs oil instead of moisture/water. It is intended to encompass both materials with chemical affinity and materials with physical affinity. Examples of suitable materials are absorbing polymers, e.g. so called super absorbent polymers such as starch-acrylonitrile copolymers, cross-linked acrylic homo-polymers, cross-linked polyacrylate/polyacrylamide copolymers; molecular sieves such as silica gel, zeolites - microporous aluminosilicates; minerals such as calcium sulphate, calcium chloride, magnesium sulphate; clays such as montmorillonite clay. The moisture absorbing material should also be chemically compatible with the used lubricant, i.e. the lubricant should not be chemically affected by the moisture absorbing material, e.g. due to chemical reactions with the material or catalysed by the material.

Materials with a combined chemical and physical affinity may also be used, e.g. materials having physical affinity in the form of hollows, and where the hollows also have a chemical affinity, in line with the above discussion regarding affinity. Examples of such materials are zeolites, e.g. molecular sieve 3A, sodium/potassium aluminosilicate.

In fig. 4 is shown a second embodiment of a moisture absorbing device 30. This device resembles the device according to the first embodiment in that it comprises a hollow part 34 in the interior of the plug 32, which hollow part is located externally of the gearbox when the plug is inserted in the hole 14. In this hollow part 24 there is arranged a moisture absorbing body 36 of a moisture absorbing material 37. There is free communication between the interior 15 of the gearbox and the interior of the plug with the moisture absorbing material 37. In this embodiment the moisture absorbing body 36 is illustrated as smaller than in the first embodiment, and there is a certain amount of free space between the body 36 and the inner wall of the hollow part 34. This allows for the moisture absorbing material 37 to expand/change volume inside the hollow part 34, during absorption of moisture. The moisture absorbing material may be any one suitable chosen from the above mentioned examples of materials, or any other suitable expanding material. The expansion of the material may be used as an indicator of how much moisture the device has absorbed. If required, and depending on the material used, the moisture absorbing material may be contained within a moisture/water permeable film or shell 38, or similar as illustrated in Fig. 4. This will prevent that the material spreads into the interior of the gearbox. This shell should be of an expandable or elastic material in order to accommodate an expansion of the volume of the moisture absorbing material. It should also be compatible with the used lubricant, in the same way as the moisture absorbing material as described above.

Examples of possible moisture/water permeable shell materials are polyethylene film, polyester, laminates, etc.

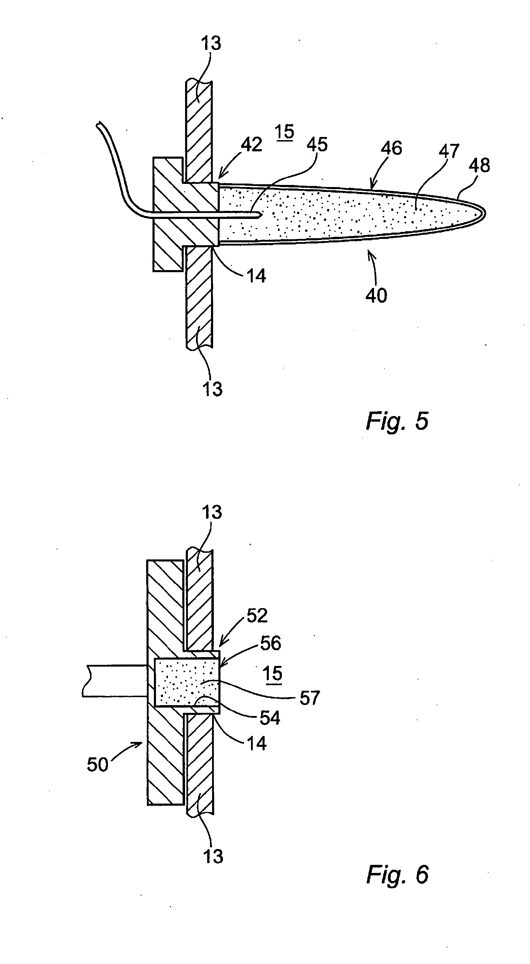

In Fig. 5 is illustrated a third embodiment of a moisture absorbing device according to the present invention. In this embodiment, the part of the plug 42 that forms the moisture absorbing device 40 is located in the interior 15 of the gearbox. As in the previous embodiments, the device comprises a moisture absorbing body 46 comprising a moisture absorbing material 47. The moisture absorbing material 47 is contained in a water permeable film or shell 48, which keeps the moisture absorbing material in place and attached to the plug 42, while at the same time it does not prevent the material from absorbing moisture. The function corresponds to what has been described above and examples of materials are the same as given above.

In Fig. 6 is illustrated a fourth embodiment of a moisture absorbing device 50 according to the present invention. This device is integrated in an oilplug 52, which may be e.g. an inspection oilplug inserted in an inspection hole in the gearbox. The moisture absorbing body 56 with its moisture absorbing material 57 is completely contained within the plug , by means of being placed in a hollow portion 54 provided within the plug, with an opening facing the interior 15 of the gearbox. This plug is primarily designed to be utilizable as a regular oilplug.

It may be desirable to be able to obtain information about the status of the moisture absorbing material in an easily accessible manner. It has already been described in connection with Fig. 4 how the moisture absorbing material can be of a kind that changes volume depending on the degree of moisture absorption. Alternatively, the absorbing material may be chosen to have other physical properties that are adapted to change depending on the amount of absorbed moisture. Another example is a moisture absorbing material of a kind that changes colour depending on the amount of absorbed moisture. This change of volume or colour can for example be visually checked in order to determine if the device has absorbed so much moisture that it is now time to replace it with a new device. The visual check can be made by removing the plug with the moisture absorbing device. In Fig. 1 is illustrated another alternative. The external wall of the hollow part 24 of the plug 22 is provided with a transparent portion 21 through which the absorbing material 27 can be visually inspected. Another example of a possible changing physical property is electrical resistance.

According to another alternative, illustrated in Fig. 5, the moisture absorbing device may comprise a sensor device 45 adapted to emit a signal, reflecting the status of absorbed moisture in the moisture absorbing device, to an indicator device which indicates the status of absorbed moisture. The indicator device may for example be a lamp or a device giving a sound signal. Alternatively, the sensor device may emit a signal to a control system 1 a. This control system may be a robot controller, a remote service, a remote control device or any other type of control system or device regularly used in connection with industrial robots. The signal may be emitted via any suitable means, wireless or not. Examples of possible sensors are sensors using electrical resistance to measure moisture level.

Naturally, the different types of status indicators, volume change, colour change, sensors emitting signals to different systems, may be applied in any one of the described embodiments of the moisture absorbing device.

In all of the illustrated embodiments, the plug with the moisture absorbing device is removable in order to be able to replace the moisture absorbing device/plug with a new one, whenever desired or necessary.

The present invention is not limited to the disclosed examples, but may be modified in many ways that would be apparent to the skilled person, within the scope of the appended claims.

## Claims

1. An industrial robot transmission system (9) for the transmission of movement to a robot part, comprising at least one motor (10) and at least one gearbox (12) containing a lubricant, **characterized in that** the gearbox is provided with an integrated moisture absorbing device (20; 30; 40; 50) comprising a moisture absorbing material (27; 37; 47; 57) adapted to absorb moisture contained in the gearbox.

2. A transmission system according to claim 1, **characterized in that** the moisture absorbing device (20; 30; 40; 50) comprises a moisture absorbing material (27; 37; 47; 57) with higher affinity to water than the affinity of the lubricant to water.

3. A transmission system according to claim 1 or claim 2, **characterized in that** the moisture absorbing device (20; 30; 40; 50) comprises a moisture absorbing material (27; 37; 47; 57) with higher affinity to water than to the lubricant.

4. A transmission system according to any one of the preceding claims, **characterized in that** the moisture absorbing device (20; 30; 40; 50) is removable.

5. A transmission system according to any one of the preceding claims, **characterized in that** the moisture absorbing device (20; 30; 40; 50) is part of a plug (22; 32; 42; 52) located in a hole (14) in a wall (13) of the gearbox (12).

6. A transmission system according to any one of the preceding claims, **characterized in that** the gearbox (12) is provided with at least one oilplug hole for the filling or draining of lubricant in the gearbox, and the moisture absorbing device (20; 30; 40; 50) is integrated in an oilplug designed to be inserted in the oilplug hole.

7. A transmission system according to any one of the preceding claims, **characterized in that** the moisture absorbing device (30; 40) comprises a moisture permeable shell (38; 48) surrounding the moisture absorbing material.

8. A transmission system according to any one of the preceding claims, **characterized in that** the moisture absorbing device (20; 30; 40; 50) comprises a moisture absorbing material (27; 37; 47; 57) having a physical property that is adapted to change depending on the amount of absorbed moisture.

9. A transmission system according to any one of the preceding claims, **characterized in that** the moisture absorbing device (40) comprises a sensor device (45) adapted to emit a signal, reflecting the status of absorbed moisture in the moisture absorbing device, to an indicator device which indicates the status of absorbed moisture.

10. A transmission system according to any one of the preceding claims, **characterized in that** the moisture absorbing device (40) comprises a sensor device (45) adapted to emit a signal, reflecting the status of absorbed moisture in the moisture absorbing device, to a control system (1 a).

11. An industrial robot comprising a transmission system (9) with an integrated moisture absorbing device (20; 30; 40; 50) according to any one of claims 1-10.

12. A method for preventing the deterioration of a lubricant due to absorption of with the step of moisture inside an industrial robot used in surroundings with high humidity, integrating a moisture absorbing device (20; 30; 40; 50) comprising a moisture absorbing material (27; 37; 47; 57) in a gearbox containing the lubricant and being part of a transmission system (9) for the transmission of movement to a robot part.

13. A method according to claim 12, with the step of choosing a moisture absorbing material (27; 37; 47; 57) with higher affinity to water than the affinity of the lubricant to water.

14. A method according to claim 12 or claim 13, with the step of choosing a moisture absorbing material (27; 37; 47; 57) with higher affinity to water than to the lubricant.

15. A method according to any one of claims 12-14, with the step of choosing a moisture absorbing material (27; 37; 47; 57) having a physical property that is adapted to change depending on the amount of absorbed moisture.

16. A method according to any one of claims 13-15, with the step of integrating the moisture absorbing device (20; 30; 40; 50) in a part of a plug (22; 32; 42; 52) located in a hole (14) in a wall (13) of the gearbox (12).

17. A method according to claim 16, with the step of integrating the moisture absorbing device (20; 30; 40; 50) in an oilplug of the gearbox.

## Patentansprüche

1. Industrieroboter-Kraftübertragungssystem (9) für die Übertragung einer Bewegung an einen Roboterteil, das mindestens einen Motor (10) und mindestens ein Getriebegehäuse (12), das ein Schmiermittel enthält, umfasst, **dadurch gekennzeichnet, dass** das Getriebegehäuse mit einer integrierten Feuchtigkeitsabsorptionsvorrichtung (20; 30; 40; 50) versehen ist, die ein Feuchtigkeitsabsorptionsmaterial (27; 37; 47; 57) umfasst, das dazu ausgelegt ist, Feuchtigkeit, die in dem Getriebegehäuse enthalten ist, zu absorbieren.

2. Kraftübertragungssystem nach Anspruch 1, **dadurch gekennzeichnet, dass** die Feuchtigkeitsabsorptionsvorrichtung (20; 30; 40; 50) ein Feuchtigkeitsabsorptionsmaterial (27; 37; 47; 57) umfasst, dessen Affinität zu Wasser höher ist als die Affinität des Schmiermittels zu Wasser.

3. Kraftübertragungssystem nach Anspruch 1 oder Anspruch 2, **dadurch gekennzeichnet, dass** die Feuchtigkeitsabsorptionsvorrichtung (20; 30; 40; 50) ein Feuchtigkeitsabsorptionsmaterial (27; 37; 47; 57) umfasst, das eine höhere Affinität zu Wasser als zu dem Schmiermittel besitzt.

4. Kraftübertragungssystem nach einem der vorhergehenden Ansprüche, **dadurch gekennzeichnet, dass** die Feuchtigkeitsabsorptionsvorrichtung (20; 30; 40; 50) entnehmbar ist.

5. Kraftübertragungssystem nach einem der vorhergehenden Ansprüche, **dadurch gekennzeichnet, dass** die Feuchtigkeitsabsorptionsvorrichtung (20; 30; 40; 50) Teil eines Stopfens (22; 32; 42; 52) ist, der sich in einem Loch (14) in einer Wand (13) des Getriebegehäuses (12) befindet.

6. Kraftübertragungssystem nach einem der vorhergehenden Ansprüche, **dadurch gekennzeichnet, dass** das Getriebegehäuse (12) mit mindestens einem Ölstopfenloch zum Einfüllen oder Entleeren des in dem Getriebegehäuse befindlichen Schmiermittels versehen ist und die Feuchtigkeitsabsorptionsvorrichtung (20; 30; 40; 50) in einen Ölstopfen integriert ist, der dazu ausgelegt ist, in das Ölstopfenloch eingesetzt zu werden.

7. Kraftübertragungssystem nach einem der vorhergehenden Ansprüche, **dadurch gekennzeichnet, dass** die Feuchtigkeitsabsorptionsvorrichtung (30; 40) eine für Feuchtigkeit durchlässige Hülle (38; 48) umfasst, die das Feuchtigkeitsabsorptionsmaterial umgibt.

8. Kraftübertragungssystem nach einem der vorhergehenden Ansprüche, **dadurch gekennzeichnet, dass** die Feuchtigkeitsabsorptionsvorrichtung (20; 30; 40; 50) ein Feuchtigkeitsabsorptionsmaterial (27; 37; 47; 57) umfasst, das eine physikalische Eigenschaft besitzt, die dazu ausgelegt ist, sich abhängig von der Menge der absorbierten Feuchtigkeit zu ändern.

9. Kraftübertragungssystem nach einem der vorhergehenden Ansprüche, **dadurch gekennzeichnet, dass** die Feuchtigkeitsabsorptionsvorrichtung (40) eine Sensorvorrichtung (45) umfasst, die dazu ausgelegt ist, ein Signal, das den Zustand der absorbierten Feuchtigkeit in der Feuchtigkeitsabsorptionsvorrichtung wiedergibt, an eine Anzeigevorrichtung auszusenden, die den Zustand der absorbierten Feuchtigkeit anzeigt.

10. Kraftübertragungssystem nach einem der vorhergehenden Ansprüche, **dadurch gekennzeichnet, dass** die Feuchtigkeitsabsorptionsvorrichtung (40) eine Sensorvorrichtung (45) umfasst, die dazu ausgelegt ist, ein Signal, das den Zustand der absorbierten Feuchtigkeit in dem Feuchtigkeitsabsorptionsvorrichtung wiedergibt, an ein Steuersystem (1a) auszusenden.

11. Industrieroboter, der ein Kraftübertragungssystem (9) mit einer integrierten Feuchtigkeitsabsorptionsvorrichtung (20; 30; 40; 50) nach einem der Ansprüche 1-10 umfasst.

12. Verfahren zum Verhindern der Verschlechterung eines Schmiermittels aufgrund der Absorption von Feuchtigkeit innerhalb eines Industrieroboters, der in einer Umgebung mit hoher Feuchtigkeit verwendet wird, mit dem Schritt des Integrierens einer Feuchtigkeitsabsorptionsvorrichtung (20; 30; 40; 50), die ein Feuchtigkeitsabsorptionsmaterial (27; 37; 47; 57) umfasst, in ein Getriebegehäuse, das ein Schmiermittel enthält und Teil eines Kraftübertragungssystems (9) für die Übertragung einer Bewegung an einen Roboterteil ist.

13. Verfahren nach Anspruch 12 mit dem Schritt des Wählens eines Feuchtigkeitsabsorptionsmaterials (27; 37; 47; 57), dessen Affinität zu Wasser höher ist als die Affinität des Schmiermittels zu Wasser.

14. Verfahren nach Anspruch 12 oder Anspruch 13, mit dem Schritt des Wählens eines Feuchtigkeitsabsorptionsmaterials (27; 37; 47; 57), das eine höhere Affinität zu Wasser besitzt als zu dem Schmiermittel.

15. Verfahren nach einem der Ansprüche 12-14 mit dem Schritt des Wählens eines Feuchtigkeitsabsorptionsmaterials (27; 37; 47; 57), das eine physikalische Eigenschaft besitzt, die dazu ausgelegt ist, sich abhängig von der Menge der absorbierten Feuchtigkeit zu ändern.

16. Verfahren nach einem der Ansprüche 13-15 mit dem Schritt des Integrierens der Feuchtigkeitsabsorptionsvorrichtung (20; 30; 40; 50) in einen Teil eines Stopfens (22; 32; 42; 52), der sich in einem Loch (14) in einer Wand (13) des Getriebegehäuses (12) befindet.

17. Verfahren nach Anspruch 16 mit dem Schritt des Integrierens der Feuchtigkeitsabsorptionsvorrichtung (20; 30; 40; 50) in einen Ölstopfen des Getriebegehäuses.

## Revendications

1. Système de transmission pour robot industriel (9) pour la transmission de mouvement à une partie de robot, comprenant au moins un moteur (10) et au moins une boîte d'engrenages (12) contenant un lubrifiant, **caractérisé en ce que** cette boîte d'engrenages est pourvue d'un dispositif absorbant l'humidité intégré (20 ; 30 ; 40 ; 50) comprenant une matière absorbant l'humidité (27 ; 37 ; 47 ; 57) adaptée pour absorber l'humidité dans la boîte d'engrenages.

2. Système de transmission selon la revendication 1, **caractérisé en ce que** le dispositif absorbant l'humidité (20 ; 30 ; 40 ; 50) comprend une matière absorbant l'humidité (27 ; 37 ; 47 ; 57) avec une plus grande affinité à l'eau que l'affinité du lubrifiant à l'eau.

3. Système de transmission selon la revendication 1 ou la revendication 2, **caractérisé en ce que** le dispositif absorbant l'humidité (20 ; 30 ; 40 ; 50) comprend une matière absorbant l'humidité (27 ; 37 ; 47 ; 57) avec une plus grande affinité à l'eau qu'au lubrifiant.

4. Système de transmission selon l'une quelconque des revendications précédentes, **caractérisé en ce que** le dispositif absorbant l'humidité (20 ; 30 ; 40 ; 50) est amovible.

5. Système de transmission selon l'une quelconque des revendications précédentes, **caractérisé en ce que** le dispositif absorbant l'humidité (20 ; 30 ; 40 ; 50) fait partie d'un bouchon (22 ; 32 ; 42 ; 52) situé dans un trou (14) dans une paroi (13) de la boîte d'engrenages (12).

6. Système de transmission selon l'une quelconque des revendications précédentes, **caractérisé en ce que** la boîte d'engrenages (12) est pourvue d'au moins un trou pour bouchon d'huile pour remplir et vider le lubrifiant dans la boîte d'engrenages, et le dispositif absorbant l'humidité (20 ; 30 ; 40 ; 50) est intégré dans le bouchon d'huile conçu pour être inséré dans le trou pour bouchon d'huile.

7. Système de transmission selon l'une quelconque des revendications précédentes, **caractérisé en ce que** le dispositif absorbant l'humidité (30 ; 40) comprend une coquille perméable (38 ; 48) entourant la matière absorbant l'humidité.

8. Système de transmission selon l'une quelconque des revendications précédentes, **caractérisé en ce que** le dispositif absorbant l'humidité (20 ; 30 ; 40 ; 50) comprend une matière absorbant l'humidité (27 ; 37 ; 47 ; 57) ayant une propriété physique qui est adaptée de façon à changer suivant la quantité d'humidité absorbée.

9. Système de transmission selon l'une quelconque des revendications précédentes, **caractérisé en ce que** le dispositif absorbant l'humidité (40) comprend un dispositif capteur (45) adapté de façon à émettre un signal, réfléchissant l'état de l'humidité absorbée dans le dispositif absorbant l'humidité, à un dispositif indicateur qui indique l'état de l'humidité absorbée.

10. Système de transmission selon l'une quelconque des revendications précédentes, **caractérisé en ce que** le dispositif absorbant l'humidité (40) comprend un dispositif capteur (45) adapté de façon à émettre un signal, réfléchissant l'état de l'humidité absorbée dans le dispositif absorbant l'humidité, à un système de commande (1a).

11. Robot industriel comprenant un système de transmission (9) avec un dispositif d'absorption d'humidité intégré (20 ; 30 ; 40 ; 50) selon l'une quelconque des revendications 1 à 10.

12. Procédé pour empêcher la détérioration d'un lubrifiant à cause de l'absorption d'humidité à l'intérieur d'un robot industriel utilisé dans un environnement avec une humidité élevée, avec l'étape consistant à intégrer un dispositif absorbant l'humidité (20 ; 30 ; 40 ; 50) comprenant une matière absorbant l'humidité (27 ; 37 ; 47 ; 57) dans une boîte d'engrenages contenant le lubrifiant et faisant partie d'un système de transmission (9) pour la transmission de mouvement à une partie de robot.

13. Procédé selon la revendication 12, avec l'étape consistant à choisir une matière absorbant l'humidité (27 ; 37 ; 47 ; 57) avec une plus grande affinité à l'eau que l'affinité du lubrifiant à l'eau.

14. Procédé selon la revendication 12 ou la revendication 13, avec l'étape consistant à choisir une matière absorbant l'humidité (27 ; 37 ; 47 ; 57) avec une plus grande affinité à l'eau qu'au lubrifiant.

15. Procédé selon l'une quelconque des revendications 12 à 14, avec l'étape consistant à choisir une matière absorbant l'humidité (27 ; 37 ; 47 ; 57) ayant une propriété physique qui est adaptée à changer suivant la quantité d'humidité absorbée.

16. Procédé selon l'une quelconque des revendications 13 à 15, avec l'étape consistant à intégrer le dispositif absorbant l'humidité (20 ; 30 ; 40 ; 50) dans une partie d'un bouchon (22 ; 32 ; 42 ; 52) situé dans un trou (14) dans une paroi (13) de la boîte d'engrenages (12).

17. Procédé selon la revendication 16, avec l'étape consistant à intégrer le dispositif d'absorption d'humidité (20 ; 30 ; 40 ; 50) dans un bouchon d'huile de la boîte d'engrenages.
